# EUROPEAN PATENT SPECIFICATION

(11) **EP 4 407 472 B1**
(45) Date of publication and mention of the grant of the patent: **17.09.2025**
(21) Application number: 24153952.7
(22) Date of filing: 25.01.2024
(51) Int. Cl.: G06F 12/0811, G06F 12/1009, G06F 12/122, G06F 12/123, G06F 12/128

(54) **SYSTEM AND METHOD FOR MANAGING A MEMORY HIERARCHY**
SYSTEM UND VERFAHREN ZUR VERWALTUNG EINER SPEICHERHIERARCHIE
SYSTÈME ET PROCÉDÉ DE GESTION D'UNE HIÉRARCHIE DE MÉMOIRE

(30) Priority: 26.01.2023 US 202318160221
(43) Date of publication of application: 31.07.2024
(73) Proprietor: VMware LLC, Palo Alto, CA 94304 (US)
(72) Inventor: Subrahmanyam, Pratap, Palo Alto, 94304 (US); Peddamallu, Venkata Subhash Reddy, Sugar Hill, 30518 (US); Akkawi, Isam Wadih, Palo Alto, 94304 (US); Nowatzyk, Andreas Georg, Palo Alto, 94304 (US); Venkatasubramanian, Rajesh, Palo Alto, 94304 (US); Yuan, Yijiang, San Diego, 92127 (US); Nayak, Adarsh Seethanadi, Troy, 12182 (US); Dua, Nishchay, Palo Alto, 94304 (US); Setty, Sreekanth, Palo Alto, 94304 (US)
(74) Representative: Dilg, Haeusler, Schindelmann Patentanwaltsgesellschaft mbH

(56) References cited:
- US-A1- 2021 019 069
- US-A1- 2021 049 101
- US-B2- 10 474 580
- US-B2- 9 330 015
- NEHA AGARWAL ET AL: "Thermostat : Application-transparent Page Management for Two-tiered Main Memory", ARCHITECTURAL SUPPORT FOR PROGRAMMING LANGUAGES AND OPERATING SYSTEMS, 1 January 2017 (2017-01-01), 2 Penn Plaza, Suite 701 New York NY 10121-0701 USA, pages 631 - 644, XP055674816, ISBN: 978-1-4503-4465-4, DOI: 10.1145/3037697.3037706
- WANG XIAOYUAN XIAOYUANW@HUST EDU CN ET AL: "Supporting Superpages and Lightweight Page Migration in Hybrid Memory Systems", ACM TRANSACTIONS ON ARCHITECTURE AND CODE OPTIMIZATION, ASSOCIATION FOR COMPUTING MACHINERY, US, vol. 16, no. 2, 9 April 2019 (2019-04-09), pages 1 - 26, XP058673067, ISSN: 1544-3566, DOI: 10.1145/3310133

## Description

### FIELD

The present disclosure relates to the field of memory management.

### BACKGROUND

Memory in a computer system is implemented as several levels or tiers because no single memory technology can meet all of the memory requirements of the computer system. Memory close to a processor is usually small but provides relatively quick access, while memory that is more distant from the processor is large but provides relatively slow access. For example, the main memory in a computer system has access times of hundreds of nanoseconds, but a more distant memory, such as non-volatile flash memory, has access times that are much longer. Because the memory closer to the processor is smaller, it is important to optimize its use, placing the most useful (often used) items in that memory.

Computer systems manage main memory with a paging system. In the computer system, memory is broken into fixed-sized blocks (referred to as pages or page frames), and multiple page tables, arranged in a hierarchy, keep track of the locations of the pages in the main memory and their accesses. In particular, page tables contain page table entries, each of which has several flags describing the status of a corresponding page. The flags include a dirty bit, a present bit, an access bit, and a write-protected bit. If a page that is pointed to by the page tables is not present or write-protected, then a page fault is incurred if and when the processor attempts to access the page.
US 2021/049101 A1 describes monitoring a data temperature of memory pages stored in a cache memory, determining that a first memory page satisfies a first threshold criterion pertaining to the data temperature and sending a migration command for initiating a transfer of the first memory page from the cache memory to a memory-mapped storage component.
US 9,330,015 B2 describes temporarily demoting mappings to selected large pages to mappings to small pages and tracking accesses to these small pages. For each selected large page, an activity level is determined based on the tracked accesses to the small pages included in the large page.

Handling page faults is quite expensive, having both hardware and software overhead. Also, page faults have after-effects, such as negating speculative pre-fetching of pages and disrupting the processor pipeline. Disrupting the processor pipeline entails lost execution time, during which the pipeline is restored to a state before the page fault.

Likewise, page migration requires remapping the page by updating the page table entry of the page to point to a new page number. In addition, with these above techniques, a flush of the translation lookaside buffer (TLB) is often required to make any changes to the PTE effective and visible to the processor, thereby disturbing the processor caches and the TLB in the process.

### SUMMARY

One or more embodiments employ a device that is coupled to a processor to manage a memory hierarchy including a first memory and a second memory that is at a lower position in the memory hierarchy than the first memory. A method of managing the memory hierarchy, a computer system, and a non-transitory computer readable medium according to an embodiment, are laid out in the independent claims.

Further embodiments are laid out in the dependent claims.

### BRIEF DESCRIPTION OF DRAWINGS

FIG. 1 depicts a representative computer system in which embodiments may operate.
FIG. 2 is a block diagram of a CXL device implemented in the computer system in FIG. 1.
FIG. 3 is a conceptual diagram depicting how pages are demoted according to embodiments.
FIG. 4 is a conceptual diagram depicting how pages are promoted according to embodiments.
FIG. 5 depicts a flow of operations of a scanner thread for scanning, creating, and updating page tables, according to embodiments.
FIG. 6 depicts a flow of operations of an observer for tracking accesses to page table entries and demoting pages, according to embodiments.
FIG. 7 depicts a flow of operations of a hot filter thread for determining hot pages, according to embodiments.
FIG. 8 depicts a flow of operations of a promoter for determining which demoted pages to promote, according to embodiments.
FIG. 9 depicts a flow of operations of a promoter thread for promoting pages, according to embodiments.

### DETAILED DESCRIPTION

Described herein are embodiments for managing a memory hierarchy which includes a first memory and a second memory that is at a lower position in the memory hierarchy than the first memory. The first memory is system memory for a central processing unit (CPU). The second memory provides slower memory access than the first memory but is larger than the first memory. An example of the second memory is non-volatile memory such as flash memory. In the embodiments, the second memory is managed by a device that is configured to observe accesses to pages of the first memory during a predefined period of time and move a group of the pages of the first memory to the second memory if there is no access to any page in the group during the time period. For a group of pages of the first memory where there has been access during the time period, the CPU moves non-accessed pages within the group to the second memory if a large page containing both groups of pages is determined to be a "cold" large page. In addition, if the number of pages of the large page that are accessed during the time period is greater than the threshold number of pages, all pages of the large page are reassembled in a contiguous memory region of the first memory and a page table entry for the large page is updated to point to this contiguous memory region.

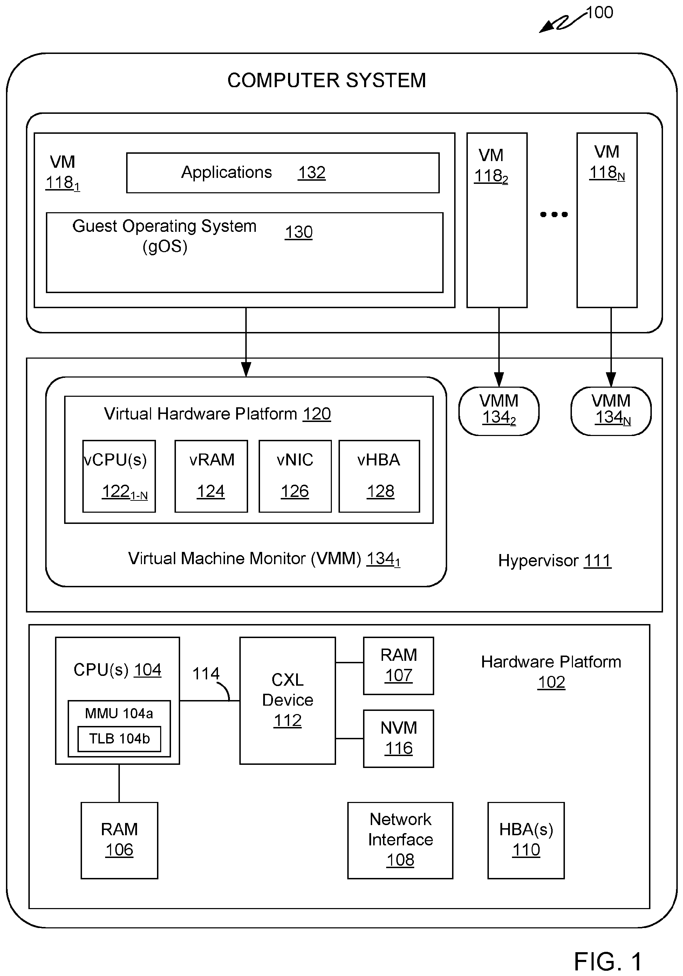

FIG. 1 depicts a host computer system 100 in which embodiments may operate. As illustrated, host computer system 100 supports multiple virtual machines (VMs) 118₁-118_{N}, which are an example of virtual computing instances that run on and share a common hardware platform 102. Hardware platform 102 includes conventional computer hardware components, such as random access memory (RAM) 106, one or more network interfaces 108, host bus adapter (HBA) 110, and one or more central processing units (CPUs) 104. CPUs 104 may include processing units having multiple cores, and each of CPUs 104 includes a memory management unit (MMU) 104a that is configured to perform logical-to-physical address translations using page tables and to cache recent translations in a translation lookaside buffer (TLB) 104b. In the embodiments, hardware platform 102 also includes a CXL device 112 coupled to CPUs 104 via a cache-coherent interconnect 114 that conforms to the CXL (Computer Express Link) standard, a local volatile memory (local RAM 107) for CXL device 112, and a local non-volatile memory (NVM 116), such as flash memory, for CXL device 112.

A virtualization software layer hereinafter referred to as a hypervisor 111, is installed on top of hardware platform 102. Hypervisor 111 makes possible the concurrent instantiation and execution of one or more VMs 118₁-118_{N}. The interaction of a VM 118 with hypervisor 111 is facilitated by the virtual machine monitors (VMMs) 134₁-134_{N}. Each VMM 134₁-134_{N} is assigned to and monitors a corresponding VM 118₁-118_{N}. In one embodiment, hypervisor 111 is a bare metal hypervisor such as VMware ESXi^{®}, which is available from VMware, Inc. of Palo Alto, CA. In an alternative embodiment, hypervisor 111 runs on top of a host operating system, which itself runs on hardware platform 102. In such an embodiment, hypervisor 111 operates above an abstraction level provided by the host operating system.

After instantiation, each of VMs 118₁-118_{N} encapsulates a virtual hardware platform 120 that is executed under the control of hypervisor 111. Virtual hardware platform 120 of VM 118₁, for example, includes but is not limited to such virtual devices as one or more virtual CPUs (vCPUs) 122₁-122_{N}, a virtual random access memory (vRAM) 124, a virtual network interface adapter (vNIC) 126, and a virtual HBA 128. Virtual hardware platform 120 supports the installation of a guest operating system (guest OS) 130, which is capable of executing applications 132. Examples of guest OS 130 include any of the well-known operating systems, such as the Microsoft Windows^{®} operating system, the Linux^{®} operating system, and the like.

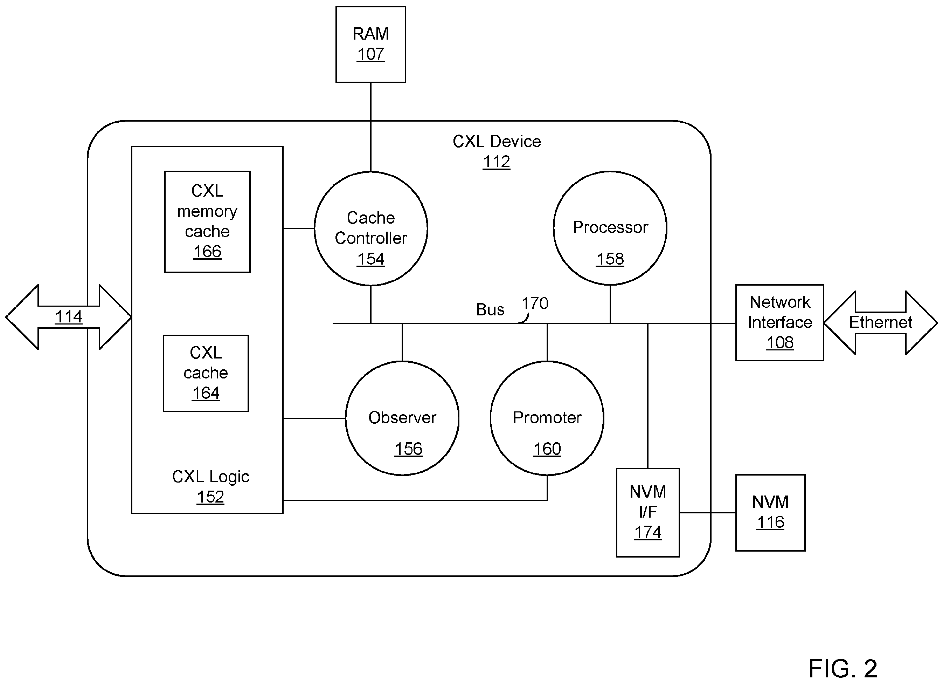

FIG. 2 is a block diagram of CXL device 112 implemented in host computer system 100. CXL device 112 includes CXL logic 152, a cache controller 154, a processor 158, an observer 156, a promoter 160, and a non-volatile memory interface (NVM IF) 174, each of which is coupled to a bus 170. In one embodiment, CXL device 112 is implemented as a field programmable gate array (FPGA).

CXL logic 152 is a logic circuit that implements the CXL standard, which defines three different protocols: CXL.io, CXL.cache, and CXL.mem. CXL.io is based on PCIe 5.0 with a few enhancements and provides configuration, link initialization and management, device discovery and enumeration, interrupts, direct memory access (DMA), and register I/O access using non-coherent loads/stores. CXL.cache allows CXL device 112 to coherently access and cache RAM 106 in CXL cache 164 (which includes memory configured in CXL device 112 and may also include part of local RAM 107) with a low latency request/response interface. CXL.mem allows CPUs 104 to coherently access CXL memory, which may be local RAM 107, NVM 116, or remote RAM/NVM accessed over network interface 108. CXL device 112 caches some of this CXL memory in CXL memory cache 166, which includes memory configured in CXL device 112 and may also include part of local RAM 107.

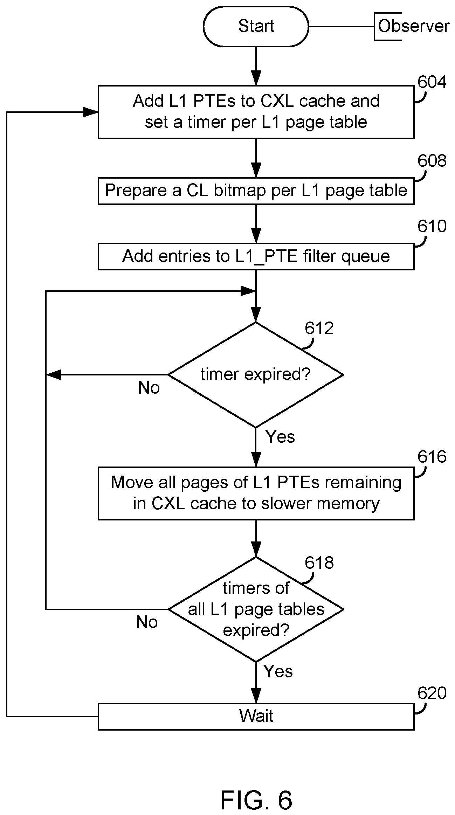

Cache controller 154 is a control circuit that controls caching of the CXL memory in CXL memory cache 166. Observer 156 is a logic circuit that is configured to track accesses to page table entries (PTEs) and demoting pages. The operations of observer 156 are described below in conjunction with FIG. 6. Promoter 160 is a logic circuit that is configured to determine which of the demoted pages to promote back into RAM 106. NVM IF 174 is an interface circuit to NVM 116 that manages read and write accesses to NVM 116.

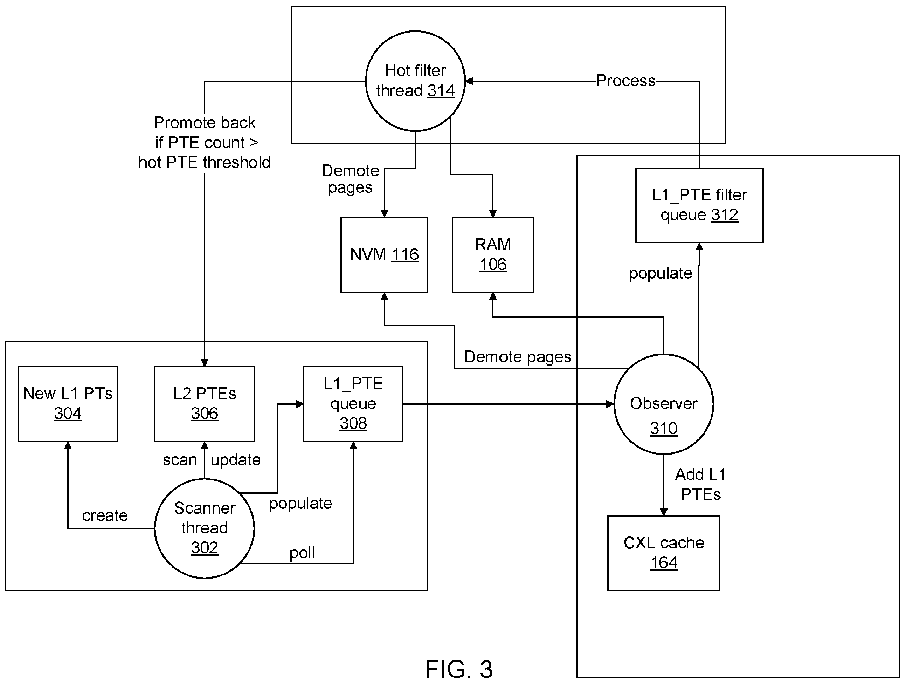

FIG. 3 is a conceptual diagram depicting how pages are demoted according to embodiments. Prior to any page demotion, scanner thread 302, which is a process running in hypervisor 111, scans a batch of level-2 (L2) page table entries (depicted as L2 PTEs 306 in FIG. 3). Each L2 PTE may include pointers to (memory addresses of) level-1 (L1) page tables or a single pointer to a large page (e.g., 2 MB page). For each L2 PTE that points to a large page, scanner thread 302 creates a new L1 page table that point to the set of pages (e.g., 4 KB pages) that make up the large page. New L1 page tables that are created in this manner are depicted in FIG. 3 as new L1 PTs 304. After scanning, scanner thread 302 populates a queue (depicted as L1_PTE queue 308 in FIG. 3) for processing by observer 156. Then, at each polling interval, scanner thread 302 examines the queue to determine whether all PTEs of a new L1 page table have been processed by observer 156. If so, scanner thread 302 updates the L2 page table entry corresponding to the new L1 page table so that it points to the new L1 page table.

Observer 310 processes the L1 PTEs that are identified in L1_PTE queue 308 by exclusive reading contents of the L1 PTEs into CXL cache 164, and sets a timer interval for each L1 page table when all PTEs of that L1 page table have been processed. Alternatively, a timer interval can be set for each cache line containing a set of L1 PTEs (e.g., 16 L1 PTEs). For each L1 page table, observer 310 demotes those pages corresponding to PTEs that remain in CXL cache 164 at the expiration of the timer interval by moving them from RAM 106 to NVM 116. In addition, observer 310 populates a queue (depicted as L1_PTE filter queue 312) for processing by hot filter thread 314, which is another process running in hypervisor 111.

L1_PTE filter queue 312 contains a bitmap for each L1 page table indicating which cache lines, each containing a set of L1 PTEs, have been evicted from CXL cache 164. Hot filter thread 314 examines this queue to identify the PTEs that have been evicted and counts the number of access bits set in these PTEs. Alternatively, hot filter thread 314 counts the number of access bits in these PTEs and resets the access bits for further observation. Based on this counted number or re-observed counted number, hot filter thread 314 either performs a reassembly of all the small pages of the L1 page table to become a large page, or demotes all non-accessed pages of the L1 page table by moving them from RAM 106 to NVM 116.

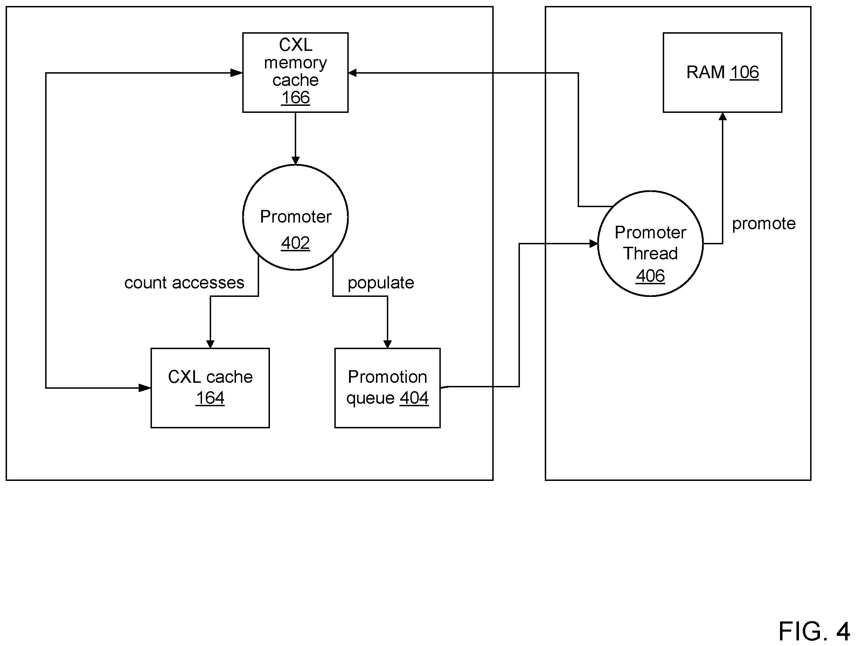

FIG. 4 is a conceptual diagram depicting how pages are promoted according to embodiments. Promoter 402 carries out its operations on each page cached in CXL memory cache 166. When promoter 402 determines that a page cached in CXL memory cache 166 is accessed more than a threshold number of times during a timer interval, promoter 402 adds a page number of the page to a promotion queue 404. Promoter thread 406 is a process running in hypervisor 111 that promotes each page identified in the promotion queue by moving the page from NVM 116 to RAM 106.

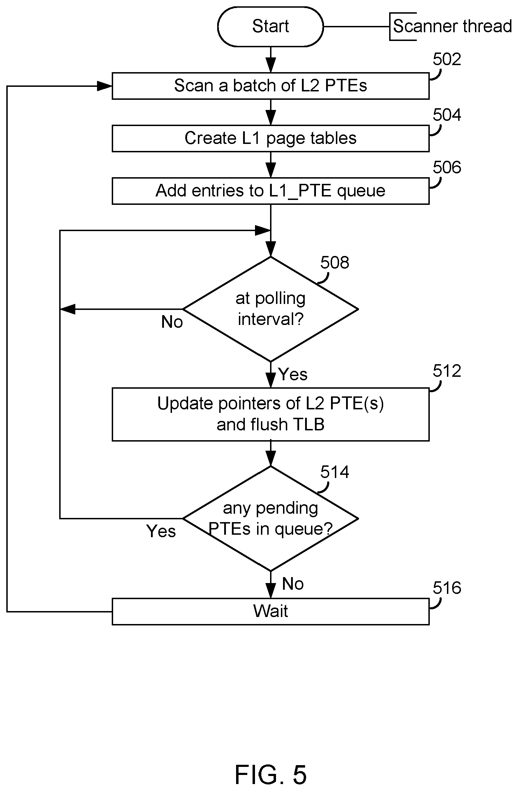

FIG. 5 depicts a flow of operations of scanner thread 302. In step 502, scanner thread 302 scans a batch of L2 page table entries (L2 PTEs 306) for pointers to (e.g., machine addresses of) either existing L1 page tables, each of which includes PTEs that point to a set of small pages, or a large page (e.g., 2 MB page) For each L2 page table entry that directly points to a large page (e.g., 2 MB page) instead of an L1 page table, in step 504, scanner thread 302 creates an L1 page table for the L2 page table entry. Each such L1 page table contains PTEs that point to a set of small pages (e.g., 4 KB pages) that make up the one large page. The L1 page tables, either existing or newly created, are used for page translation to enable observer 310 to track accesses to small pages that are made through the scanned L2 page table entries. In step 506, scanner thread 302 adds entries to an L1_PTE queue 308. Each added entry corresponds to a set of PTEs of one of the existing or new L1 page tables, and contains a machine address (MA) of the starting PTE of the set, a bitmap indicating which of the PTEs in the set are valid, and space for observer 310 to indicate that observer 310 has read the entry and pulled the set of PTEs corresponding to the entry into CXL cache 164.

To synchronize the operations of scanner thread 302 and observer 310 with respect to L1_PTE queue 308, scanner thread 302 sets up a polling interval for examining L1_PTE queue 308 to determine whether or not observer 310 has finished pulling in all PTEs of an L1 page table into CXL cache 164. Thus, at each polling interval (step 508, Yes), if scanner thread 302 determines from L1_PTE queue 308 that observer 310 has finished pulling in all PTEs of an L1 page table into CXL cache 164, scanner thread 302 in step 512 updates the corresponding L2 page table entry as needed (to point to a new L1 page table if it was created in step 504) and flushes the TLB so that any new accesses to the pages of the L1 page table (existing or new) can be observed. In step 514, if scanner thread 302 determines from L1 PTE queue 308 that not all PTEs in L1 PTE queue 308 have been pulled into CXL cache 164 (step 514, Yes), scanner thread 302 returns to step 508 for the next polling interval. If all PTEs in L1_PTE queue 308 have been pulled into CXL cache 164 (step 514, No), scanner thread 302 waits a short time in step 516 and then resumes the operations at step 502.

FIG. 6 depicts a flow of operations of observer 310. Observer 310 tracks accesses to small pages that are made through the L2 page table entries scanned by scanner thread 302 and moves the small pages that are not accessed during a predefined timer period (referred to herein as a "cooking" period) to the address space of NVM 116 (initially to CXL memory cache 166 and later written back to NVM 116). In step 604, observer 310 accesses L1 PTE queue 308 to retrieve memory locations of L1 PTEs and pulls (reads) the L1 PTEs into cache lines of CXL cache 164. The size of cache lines of CXL cache 164 may be any typical cache line size, e.g., 32, 64 and 128 bytes. Therefore, a single cache line of CXL cache 164 is large enough to store multiple L1 PTEs, e.g., 16 L1 PTEs if the cache line size is 64 bytes and each PTE is 4 bytes. Observer 310 also sets the bits in L1 PTE queue 308 corresponding to the L1 PTEs as they are pulled into CXL cache 164, and starts a timer, which is set to the cooking period, for each L1 page table when all PTEs thereof have been pulled into CXL cache 164. Then, in step 608, observer 310 prepares a separate cache line (CL) bitmap for each of the L1 page tables. Each bit of a CL bitmap represents a set of L1 PTEs that have been pulled into the cache line and is set by observer 310 when one of the L1 PTEs is accessed, and the cache line containing the accessed L1 PTE is evicted from CXL cache 164. In step 610, observer 310 adds entries to an L1 PTE filter queue 312, which is used by hot filter thread 314. Each added entry contains a machine address of one of the L1 page tables and the CL bitmap for the L1 page table, the CL bitmap indicating the cache lines evicted from CXL cache 164.

Observer 310 carries out the remaining steps of FIG. 6 each time a timer for an L1 page table (or alternatively, a timer for a set of L1 PTEs) expires. If the timer for an L1 page table has expired (step 612, Yes), observer 310 in step 616 moves all pages of PTEs of such L1 page table that remains in CXL cache 164 (because they were not evicted from), from RAM 106 to NVM 116 (with CXL memory cache 166 functioning as a cache of NVM 116). The process of moving each such page includes the steps of: (i) allocating a page in NVM 116; (ii) performing a DMA copy of the page residing in RAM 106 to the page residing in NVM 116; and (iii) updating the PTE of the page to point to the page residing in NVM 116. If, during the process of moving the pages, a cache line containing the PTEs gets evicted from CXL cache 164, observer 310 discards the cache line and any pages of PTEs stored in the evicted cache line that have not yet been moved, remain in RAM 106. When the timers of all L1 page tables have expired (step 618, Yes), observer 310 waits a short time in step 620 and then resumes the operations at step 604.

In step 616, the updating of the PTE of the page to point to the page residing in NVM 116 is performed atomically. The atomic update can be carried out in one of several ways.

First, observer 310 may be configured to support the atomic update, in particular an atomic compare-and-swap. A compare-and-swap operation is performed with the compare value having the access bit set to 0. If the page is being accessed before the swap, then the A bit would be set, and the compare will fail, which means the address will not be updated. Checking for access bit being 0 covers the race case, where the page is accessed and the cache line evicted, just before the write to update the PTE.

Second, the CXL logic 152 may be configured to support a conditional write which is dependent on the cache line still being in CXL cache 164. This mechanism does not need to have the access bit set by observer 310. In instead, observer 310 will issue this conditional write to update the PTE.

Third, the hardware and software can also cooperate and perform this function without the need for special logic, or locks. For example, in the x86 architecture, since in the extended page table, the present bit or bits are in a separate byte as the access bit, the hardware can clear the present bit (or bits), with a byte write, without affecting the other bits. After clearing, the access bit is checked to see if it is still 0, before updating the PTE with the present bit(s) enabled. If the host accesses the page before the present bit clearing was done, then the access bit will be 1, and the address update will not happen. If the host accesses the page after the present bit(s) were cleared, a page fault will be raised, prompting a page fault handler to handle the page fault.

Fourth, hypervisor 111 performs the remaps. In this scenario, CXL device 112 provides a list of cache line states, with 1 indicating which cache line is still present in CXL cache 164, and a 0 indicating which cache line was evicted. This list is used in conjunction with the access bit to remap the demoted pages to NVM 116.

Fifth, various hybrid approaches where some of the re-mappings are done by CXL device 112, and some are done in hypervisor 111, are possible. In these situations, CXL device 112 handles the re-mappings for the PTEs at the granularity of cache lines that were not evicted, and hypervisor 111 handles the re-mappings for individual PTEs that are cold (not accessed) within the cache lines that were evicted.

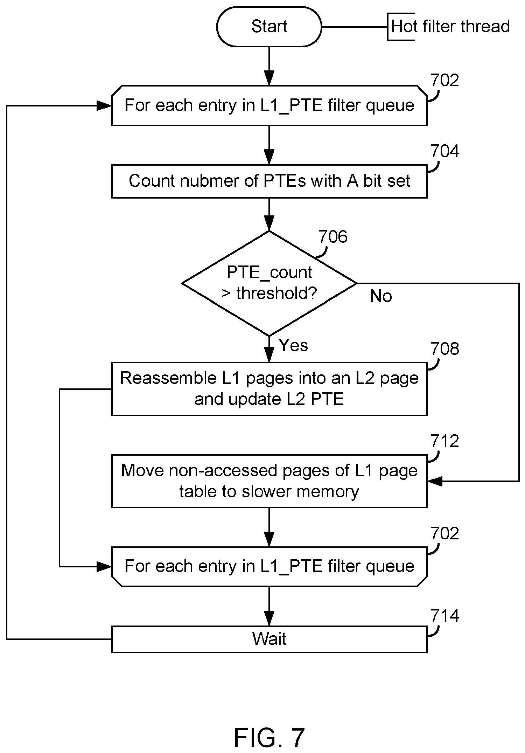

FIG. 7 depicts a flow of operations of hot filter thread 314, which accesses L1_PTE filter queue 312 to determine if the pages of any L1 page table should be reassembled as a large page and if not to find additional pages to move to slower memory, e.g., from RAM 106 to NVM 116. The operations of FIG. 7 are carried out for each entry in L1_PTE filter queue 312, which corresponds to an L1 page table (step 702). In step 704, hot filter thread 314 accesses the PTEs of the L1 page table and counts the number of PTEs having the A bit set among the accessed PTEs. If the counted number exceeds a threshold number (step 706, Yes), hot filter thread 314 in step 708 reassembles the pages of the L1 page table into a large page and updates the L2 page table entry to point to the large page. On the other hand, if the counted number does not exceed a threshold number (step 706, No), hot filter thread 314 in step 712 moves all non-accessed pages of PTEs of the L1 page table that were stored in evicted cache lines from RAM 106 to NVM 116. The process of moving is the same as described above for step 616. After each entry in L1_PTE filter queue 312 is processed in the above manner, hot filter thread 314 waits a short time in step 714 (e.g., for a new entry to be added to L1_PTE filter queue 312) and then resumes the operations at step 702.

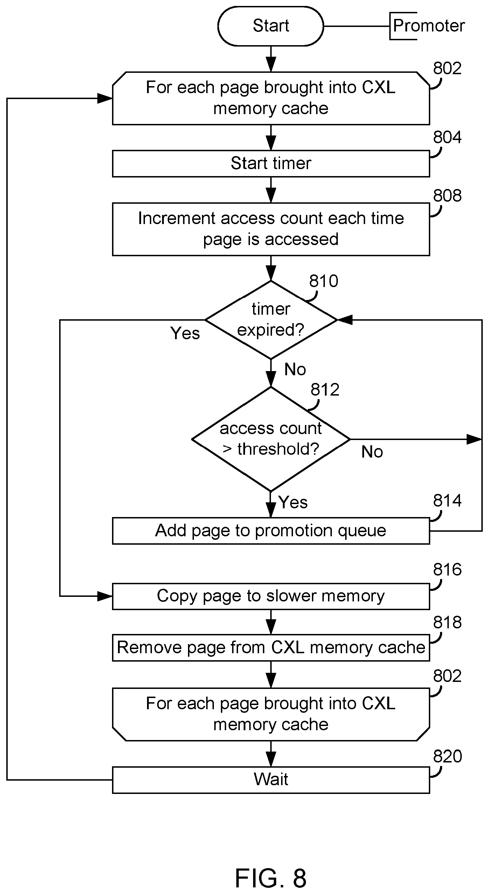

FIG. 8 depicts a flow of operations of promoter 402. The task of promoter 402 is to identify those pages in NVM 116 which can be promoted back to RAM 106. Each such page is identified by a page number in CXL memory space, hereinafter referred to as a CXL page number. The operations of FIG. 8 are carried out for each page that are brought into CXL memory cache 166 (step 802). A page that is brought into CXL memory cache 166 may be of two types. Pages that are brought into CXL memory cache 166 when they are cached in CXL memory cache 166 in the process of moving them to NVM 116 in step 616 and step 712 described above, are of a first type. Pages that are brought into CXL memory cache 166 from NVM 116 as a result of access because they are not cached in CXL memory cache 166 are of a second type. In step 804, promoter 402 sets a timer for the page. The timer period may be differently for the first type of page and the second type of page to allow for flexibility. In one embodiment, the timer period is set to be shorter for pages of the first type than for pages of the second type, because pages recently moved from RAM 106 are likely to have a higher degree of activity while those already residing in NVM 116 are likely to have been idle for a while. In step 808, promoter 402 increments an access count for the page each time the page is accessed during its timer period. In some embodiments, instead of storing an access count for each page, promoter 402 uses a Count-Min Sketch (CMS) structure, which employs a table accessed by a hash of the page number to store a count for the page. The structure is queried using the hash function to retrieve the count for the page. When CMS is used, fewer locations are needed to store a count for each page accessed, but the count stored is an approximate count. If, before its timer has expired, as determined in step 810, the access count for the page exceeds an access threshold (step 812, Yes), the CXL page number of the page is added to promotion queue 404 in step 814. Similarly to the timer period, the access threshold may be set differently for the first type of page and the second type of page. If the timer expires (step 810, Yes) prior to the access count for the page exceeding the access threshold, the page is copied to NVM 116 in step 816 and removed from CXL memory cache 166 in step 818. When all pages that are brought into CXL memory cache 166 are processed, promoter 402 waits a short time in step 820 (e.g., for a page to be inserted into CXL memory cache 166) and then resumes the operations at step 802.

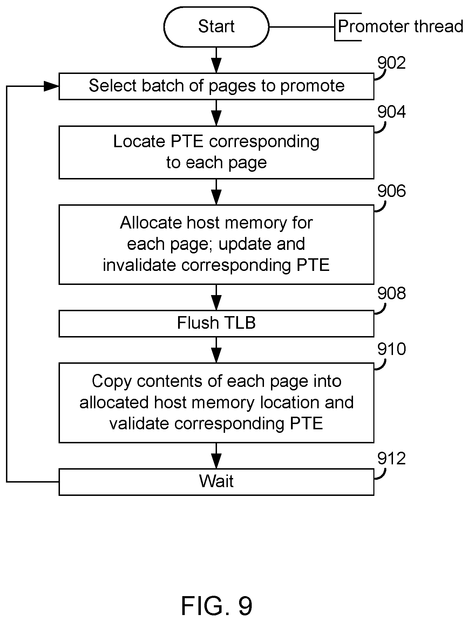

FIG. 9 depicts a flow of operations of promoter thread 406. The task of promoter thread 406 is to move a page residing in NVM 116 back to RAM 106. In step 902, promoter thread 406 selects a batch of pages residing in NVM 116 from promotion queue 404, for promotion. Then, in step 904, promoter thread 406 accesses a back map to locate the PTEs that point to the selected pages. The back map provides mappings from CXL page numbers of pages residing in NVM 116 to memory addresses of PTEs that point to them, and is updated each time a page is moved from RAM 106 to NVM 116. In step 906, promoter thread 406 allocates memory space in RAM 106 for the selected pages, updates the PTEs located in step 904 with pointers to the allocated memory space in RAM 106, and invalidates the PTEs because the contents of the selected pages have not been copied yet. In step 908, the TLB is flushed so that any mappings to the selected pages residing in NVM 116 that are cached in the TLB are deleted. Then, in step 910, promoter thread 406 performs a DMA copy of the contents of the selected pages from NVM 116 to the allocated memory space in RAM 106, and validates the PTEs. After step 910, promoter thread 406 waits a short time in step 912 and then resumes the operations at step 902 for a new batch of pages to promote.

Certain embodiments as described above involve a hardware abstraction layer on top of a host computer. The hardware abstraction layer allows multiple contexts to share the hardware resource. These contexts are isolated from each other in one embodiment, each having at least a user application program running therein. The hardware abstraction layer thus provides benefits of resource isolation and allocation among the contexts. In the foregoing embodiments, virtual machines are used as an example for the contexts and hypervisors as an example for the hardware abstraction layer. As described above, each virtual machine includes a guest operating system in which at least one application program runs. It should be noted that these embodiments may also apply to other examples of contexts, such as containers not including a guest operating system, referred to herein as "OS-less containers" (see, e.g., www.docker.com). OS-less containers implement operating system-level virtualization, wherein an abstraction layer is provided on top of the kernel of an operating system on a host computer. The abstraction layer supports multiple OS-less containers, each including an application program and its dependencies. Each OS-less container runs as an isolated process in users pace on the host operating system and shares the kernel with other containers. The OS-less container relies on the kernel's functionality to make use of resource isolation (CPU, memory, block I/O, network, etc.) and separate namespaces and to completely isolate the application program's view of the operating environments. By using OS-less containers, resources can be isolated, services restricted, and processes provisioned to have a private view of the operating system with their own process ID space, file system structure, and network interfaces. Multiple containers can share the same kernel, but each container can be constrained only to use a defined amount of resources such as CPU, memory, and I/O.

Certain embodiments may be implemented in a host computer without a hardware abstraction layer or an OS-less container. For example, certain embodiments may be implemented in a host computer running a Linux^{®} or Windows^{®} operating system.

The various embodiments described herein may be practiced with other computer system configurations, including hand-held devices, microprocessor systems, microprocessor-based or programmable consumer electronics, minicomputers, mainframe computers, and the like.

One or more embodiments of the present invention may be implemented as one or more computer programs or as one or more computer program modules embodied in one or more computer-readable media. The term computer-readable medium refers to any data storage device that can store data which can thereafter be input to a computer system. Computer-readable media may be based on any existing or subsequently developed technology for embodying computer programs in a manner that enables them to be read by a computer. Examples of a computer-readable medium include a hard drive, network-attached storage (NAS), read-only memory, random-access memory (e.g., a flash memory device), a CD (Compact Discs) --CD-ROM, a CDR, or a CD-RW, a DVD (Digital Versatile Disc), a magnetic tape, and other optical and non-optical data storage devices. The computer-readable medium can also be distributed over a network-coupled computer system so that the computer-readable code is stored and executed in a distributed fashion.

Although one or more embodiments of the present invention have been described in some detail for clarity of understanding, it will be apparent that certain changes and modifications may be made. Accordingly, the described embodiments are to be considered as illustrative and not restrictive and may be modified. In the claims, elements and/or steps do not imply any particular order of operation unless explicitly stated in the claims.

Plural instances may be provided for components, operations, or structures described herein as a single instance. Finally, boundaries between various components, operations, and data stores are somewhat arbitrary, and particular operations are illustrated in the context of specific illustrative configurations. Other allocations of functionality are envisioned. In general, structures and functionality presented as separate components in exemplary configurations may be implemented as a combined structure or component. Similarly, structures and functionality presented as a single component may be implemented as separate components.

## Claims

1. A method for managing a memory hierarchy including a first memory and a second memory that is at a lower position in the memory hierarchy than the first memory, the method comprising:
observing, over a first period of time, accesses to pages of the first memory;
determining that no page in a first group of pages of the first memory was accessed during the first period of time;
in response to determining that no page in the first group of pages was accessed during the first period of time, moving (616) each page in the first group of pages from the first memory to the second memory;
generating (704) a count of pages accessed during the first period of time in other groups of pages of the first memory;
in response to determining that the page count is less (706:NO) than a threshold number of pages, moving (712) each page in a second group of pages that was not accessed during the first period of time from the first memory to the second memory, wherein the second group of pages is one of the other groups of pages and includes at least one page which was not accessed during the first period of time and at least one page which was accessed during the first period of time;
prior to the first period of time, storing page table entries of a subset of all pages of the first memory in a cache, wherein the subset includes all the pages in the first and other groups and the page table entries of each group of pages are stored in a corresponding cache line of the cache; and
evicting from the cache a cache line that contains the page table entries of a group of pages if any one of the pages in the group is accessed during the first period of time, wherein
the step of determining that no page in the first group of pages was accessed during the first period of time includes determining that the cache line containing the page table entries of the first group of pages remains in the cache at an end of the first period of time.

2. The method of claim 1, wherein
the step of generating the count of pages includes:
examining page table entries that were stored in cache lines of the cache that were evicted from the cache during the first period of time; and
generating a count of the examined page tables entries having an access bit that is set.

3. The method of any one of the any one of the claims 1 to 2, wherein
the step of moving (616, 712) a page from the first memory to the second memory includes:
copying contents of the page from a location in the first memory to a location in the second memory; and
updating a page table entry of the page to point to the location in the second memory.

4. The method of claim 3, further comprising:
generating a count of accesses of a second page residing in the second memory; and
upon determining that the access count is greater than a threshold number of accesses, moving the second page from the second memory to the first memory.

5. The method of claim 4, further comprising:
locating a page table entry corresponding to the second page; and
updating the page table entry to point to a location in the first memory to which the second page was moved.

6. The method of any one of the claims 1 to 5, further comprising:
in response to determining that the page count is greater than the threshold number of pages,
moving each page in the first group of pages from the second memory to the first memory, and
updating a page table entry that points to a page table containing page table entries of the first group of pages and the other groups of pages to point to a location in the first memory that stores a large page that is made up of the first group of pages and the other groups of pages.

7. A computer system (100) comprising:
a processor (104) and a first memory (106) for the processor (104); and
a device (112) coupled to the processor (104) and including a cache (164) and a second memory (116),
wherein the device (112) is configured to:
observe, over a first period of time, accesses to pages of the first memory (106);
determine that no page in a first group of pages of the first memory (106) was accessed during the first period of time; and
in response to determining that no page in the first group of pages was accessed during the first period of time, move each page in the first group of pages from the first memory (106) to the second memory (116), and
wherein the processor (104) is configured to:
generate a count of pages accessed during the first period of time in other groups of pages of the first memory;
in response to determining that the page count is less than a threshold number of pages, move each page in a second group of pages that was not accessed during the first period of time from the first memory (106) to the second memory (116), wherein the second group of pages is one of the other groups of pages and includes at least one page which was not accessed during the first period of time and at least one page which was accessed during the first period of time;
prior to the first period of time, store page table entries of a subset of all pages of the first memory in the cache, wherein the subset includes all the pages in the first and other groups and the page table entries of each group of pages are stored in a corresponding cache line of the cache;
evict from the cache a cache line that contains the page table entries of a group of pages if any one of the pages in the group is accessed during the first period of time, and
the device (112) determines that no page in the first group of pages was accessed during the first period of time by determining that the cache line containing the page table entries of the first group of pages remains in the cache at an end of the first period of time.

8. The computer system (100) of claim 7, wherein
the processor (104) generates a count of pages accessed by:
examining page table entries that were stored in cache lines of the cache that were evicted from the cache during the first period of time; and
generating a count of the examined page tables entries having an access bit that is set.

9. The computer system (100) of any one of the claims 7 to 8, wherein
the device (112) moves a page from the first memory (106) to the second memory (116) by:
copying contents of the page from a location in the first memory (106) to a location in the second memory (116); and
updating a page table entry of the page to point to the location in the second memory (116);
wherein in particular
the device (112) is further configured to generate a count of accesses of a second page residing in the second memory, and
the processor (104) is further configured to move the second page from the second memory (116) to the first memory (116) upon determining that the access count is greater than a threshold number of accesses;
wherein further in particular
the processor (104) is further configured to:
locate a page table entry corresponding to the second page; and
update the page table entry to point to a location in the first memory (106) to which the second page was moved.

10. The computer system (100) of any one of the claims 7 to 9, wherein the processor (104) is further configured to:
in response to determining that the page count is greater than the threshold number of pages,
move each page in the first group of pages from the second memory to the first memory, and
update a page table entry that points to a page table containing page table entries of the first group of pages and the other groups of pages to point to a location in the first memory that stores a large page that is made up of the first group of pages and the other groups of pages.

11. The computer system (100) of any one of the claims 7 to 10, wherein
the device (112) is coupled to the processor (104) via a coherent queue interface (114).

12. A non-transitory computer readable medium comprising instructions for carrying out a method for managing a memory hierarchy including a first memory and a second memory that is at a lower position in the memory hierarchy than the first memory, the method comprising:
observing, over a first period of time, accesses to pages of the first memory;
determining that no page in a first group of pages of the first memory was accessed during the first period of time;
in response to determining that no page in the first group of pages was accessed during the first period of time, moving each page in the first group of pages from the first memory to the second memory;
generating a count of pages accessed during the first period of time in other groups of pages of the first memory;
in response to determining that the page count is less than a threshold number of pages, moving each page in a second group of pages that was not accessed during the first period of time from the first memory to the second memory, wherein the second group of pages is one of the other groups of pages and includes at least one page which was not accessed during the first period of time and at least one page which was accessed during the first period of time;
prior to the first period of time, storing page table entries of a subset of all pages of the first memory in a cache, wherein the subset includes all the pages in the first and other groups and the page table entries of each group of pages are stored in a corresponding cache line of the cache; and
evicting from the cache a cache line that contains the page table entries of a group of pages if any one of the pages in the group is accessed during the first period of time, wherein
the step of determining that no page in the first group of pages was accessed during the first period of time includes determining that the cache line containing the page table entries of the first group of pages remains in the cache at an end of the first period of time.

13. The non-transitory computer readable medium of claim 12, wherein
the step of generating the count of pages includes:
examining page table entries that were stored in cache lines of the cache that were evicted from the cache during the first period of time; and
generating a count of the examined page tables entries having an access bit that is set.

14. The non-transitory computer readable medium of any one of claims 12 to 13, wherein
the step of moving a page from the first memory to the second memory includes:
copying contents of the page from a location in the first memory to a location in the second memory; and
updating a page table entry of the page to point to the location in the second memory.

15. The non-transitory computer readable medium of claim 14, wherein
the method further comprises:
generating a count of accesses of a second page residing in the second memory; and
upon determining that the access count is greater than a threshold number of accesses, moving the second page from the second memory to the first memory.

## Patentansprüche

1. Ein Verfahren zum Verwalten einer Speicherhierarchie mit einem ersten Speicher und einem zweiten Speicher, der sich an einer niedrigeren Position in der Speicherhierarchie als der erste Speicher befindet, wobei das Verfahren aufweist:
Beobachten, über einen ersten Zeitraum, von Zugriffen auf Seiten des ersten Speichers;
Bestimmen, dass während des ersten Zeitraums auf keine Seite in einer ersten Gruppe von Seiten des ersten Speichers zugegriffen wurde;
als Reaktion auf das Bestimmen, dass während des ersten Zeitraums auf keine Seite in der ersten Gruppe von Seiten zugegriffen wurde, Bewegen (616) jeder Seite in der ersten Gruppe von Seiten von dem ersten Speicher zu dem zweiten Speicher;
Erzeugen (704) einer Zählung von Seiten, auf die während des ersten Zeitraums in anderen Gruppen von Seiten des ersten Speichers zugegriffen wurde;
als Reaktion auf das Bestimmen, dass die Seitenzählung kleiner (706:NEIN) als eine Schwellenanzahl von Seiten ist, Bewegen (712) jeder Seite in einer zweiten Gruppe von Seiten, auf die während des ersten Zeitraums nicht zugegriffen wurde, von dem ersten Speicher zu dem zweiten Speicher, wobei die zweite Gruppe von Seiten eine der anderen Gruppen von Seiten ist und mindestens eine Seite, auf die während des ersten Zeitraums nicht zugegriffen wurde, und mindestens eine Seite, auf die während des ersten Zeitraums zugegriffen wurde, aufweist;
vor dem ersten Zeitraum, Speichern von Seitentabelleneinträgen einer Teilmenge aller Seiten des ersten Speichers in einem Cache, wobei die Teilmenge alle Seiten in der ersten und anderen Gruppen aufweist und die Seitentabelleneinträge jeder Gruppe von Seiten in einer entsprechenden Cache-Zeile des Caches gespeichert sind; und
Entfernen einer Cache-Zeile aus dem Cache, die die Seitentabelleneinträge einer Gruppe von Seiten enthält, wenn während des ersten Zeitraums auf irgendeine der Seiten in der Gruppe zugegriffen wird, wobei
der Schritt des Bestimmens, dass während des ersten Zeitraums auf keine Seite in der ersten Gruppe von Seiten zugegriffen wurde, das Bestimmen aufweist, dass die Cache-Zeile, die die Seitentabelleneinträge der ersten Gruppe von Seiten enthält, an einem Ende des ersten Zeitraums in dem Cache verbleibt.

2. Das Verfahren nach Anspruch 1, wobei
der Schritt des Erzeugens der Zählung von Seiten aufweist:
Untersuchen von Seitentabelleneinträgen, die in Cache-Zeilen des Caches gespeichert wurden, die während des ersten Zeitraums aus dem Cache entfernt wurden; und
Erzeugen einer Zählung der untersuchten Seitentabelleneinträge mit einem Zugriffsbit, das gesetzt ist.

3. Das Verfahren nach einem der Ansprüche 1 bis 2, wobei
der Schritt des Bewegens (616, 712) einer Seite von dem ersten Speicher zu dem zweiten Speicher aufweist:
Kopieren von Inhalten der Seite von einem Ort in dem ersten Speicher zu einem Ort in dem zweiten Speicher; und
Aktualisieren eines Seitentabelleneintrags der Seite, um auf den Ort in dem zweiten Speicher zu zeigen.

4. Das Verfahren nach Anspruch 3, ferner aufweisend:
Erzeugen einer Zählung von Zugriffen auf eine zweite Seite, die sich in dem zweiten Speicher befindet; und
auf das Bestimmen hin, dass die Zugriffszählung größer als eine Schwellenanzahl von Zugriffen ist, Bewegen der zweiten Seite von dem zweiten Speicher zu dem ersten Speicher.

5. Das Verfahren nach Anspruch 4, ferner aufweisend:
Lokalisieren eines Seitentabelleneintrags, der der zweiten Seite entspricht; und
Aktualisieren des Seitentabelleneintrags, um auf einen Ort in dem ersten Speicher zu zeigen, zu dem die zweite Seite bewegt wurde.

6. Das Verfahren nach einem der Ansprüche 1 bis 5, ferner aufweisend:
als Reaktion auf das Bestimmen, dass die Seitenzählung größer als die Schwellenanzahl von Seiten ist,
Bewegen jeder Seite in der ersten Gruppe von Seiten von dem zweiten Speicher zu dem ersten Speicher, und
Aktualisieren eines Seitentabelleneintrags, der auf eine Seitentabelle zeigt, die Seitentabelleneinträge der ersten Gruppe von Seiten und der anderen Gruppen von Seiten enthält, um auf einen Ort in dem ersten Speicher zu zeigen, der eine große Seite speichert, die aus der ersten Gruppe von Seiten und den anderen Gruppen von Seiten besteht.

7. Ein Computersystem (100), aufweisend:
einen Prozessor (104) und einen ersten Speicher (106) für den Prozessor (104); und
eine Vorrichtung (112), die mit dem Prozessor (104) gekoppelt ist und einen Cache (164) und
einen zweiten Speicher (116) aufweist,
wobei die Vorrichtung (112) konfiguriert ist zum:
Beobachten, über einen ersten Zeitraum, von Zugriffen auf Seiten des ersten Speichers (106);
Bestimmen, dass während des ersten Zeitraums auf keine Seite in einer ersten Gruppe von Seiten des ersten Speichers (106) zugegriffen wurde; und
als Reaktion auf das Bestimmen, dass während des ersten Zeitraums auf keine Seite in der ersten Gruppe von Seiten zugegriffen wurde, Bewegen jeder Seite in der ersten Gruppe von Seiten von dem ersten Speicher (106) zu dem zweiten Speicher (116), und
wobei der Prozessor (104) konfiguriert ist zum:
Erzeugen einer Zählung von Seiten, auf die während des ersten Zeitraums in anderen Gruppen von Seiten des ersten Speichers zugegriffen wurde;
als Reaktion auf das Bestimmen, dass die Seitenzählung kleiner als eine Schwellenanzahl von Seiten ist, Bewegen jeder Seite in einer zweiten Gruppe von Seiten, auf die während des ersten Zeitraums nicht zugegriffen wurde, von dem ersten Speicher (106) zu dem zweiten Speicher (116), wobei die zweite Gruppe von Seiten eine der anderen Gruppen von Seiten ist und mindestens eine Seite, auf die während des ersten Zeitraums nicht zugegriffen wurde, und mindestens eine Seite, auf die während des ersten Zeitraums zugegriffen wurde, aufweist;
vor dem ersten Zeitraum, Speichern von Seitentabelleneinträgen einer Teilmenge aller Seiten des ersten Speichers in dem Cache, wobei die Teilmenge alle Seiten in der ersten und anderen Gruppen aufweist und die Seitentabelleneinträge jeder Gruppe von Seiten in einer entsprechenden Cache-Zeile des Caches gespeichert sind;
Entfernen einer Cache-Zeile aus dem Cache, die die Seitentabelleneinträge einer Gruppe von Seiten enthält,
wenn während des ersten Zeitraums auf irgendeine der Seiten in der Gruppe zugegriffen wird, und
die Vorrichtung (112) bestimmt, dass während des ersten Zeitraums auf keine Seite in der ersten Gruppe von Seiten zugegriffen wurde, indem bestimmt wird, dass die Cache-Zeile, die die Seitentabelleneinträge der ersten Gruppe von Seiten enthält, an einem Ende des ersten Zeitraums in dem Cache verbleibt.

8. Das Computersystem (100) nach Anspruch 7, wobei
der Prozessor (104) eine Zählung von Seiten erzeugt, auf die zugegriffen wird durch:
Untersuchen von Seitentabelleneinträgen, die in Cache-Zeilen des Caches gespeichert wurden, die während des ersten Zeitraums aus dem Cache entfernt wurden; und
Erzeugen einer Zählung der untersuchten Seitentabelleneinträge mit einem Zugriffsbit, das gesetzt ist.

9. Das Computersystem (100) nach einem der Ansprüche 7 bis 8, wobei
die Vorrichtung (112) eine Seite von dem ersten Speicher (106) zu dem zweiten Speicher (116) bewegt durch:
Kopieren von Inhalten der Seite von einem Ort in dem ersten Speicher (106) zu einem Ort in dem zweiten Speicher (116); und
Aktualisieren eines Seitentabelleneintrags der Seite, um auf den Ort in dem zweiten Speicher (116) zu zeigen;
wobei insbesondere
die Vorrichtung (112) ferner konfiguriert ist zum Erzeugen einer Zählung von Zugriffen auf eine zweite Seite, die sich in dem zweiten Speicher befindet, und
der Prozessor (104) ferner konfiguriert ist zum Bewegen der zweiten Seite von dem zweiten Speicher (116) zu dem ersten Speicher (116) auf das Bestimmen hin, dass die Zugriffszählung größer als eine Schwellenanzahl von Zugriffen ist;
wobei ferner insbesondere
der Prozessor (104) ferner konfiguriert ist zum:
Lokalisieren eines Seitentabelleneintrags, der der zweiten Seite entspricht; und
Aktualisieren des Seitentabelleneintrags, um auf einen Ort in dem ersten Speicher (106) zu zeigen, zu dem die zweite Seite bewegt wurde.

10. Das Computersystem (100) nach einem der Ansprüche 7 bis 9, wobei der Prozessor (104) ferner konfiguriert ist zum:
als Reaktion auf das Bestimmen, dass die Seitenzählung größer als die Schwellenanzahl von Seiten ist,
Bewegen jeder Seite in der ersten Gruppe von Seiten von dem zweiten Speicher zu dem ersten Speicher, und
Aktualisieren eines Seitentabelleneintrags, der auf eine Seitentabelle zeigt, die Seitentabelleneinträge der ersten Gruppe von Seiten und der anderen Gruppen von Seiten enthält, um auf einen Ort in dem ersten Speicher zu zeigen, der eine große Seite speichert, die aus der ersten Gruppe von Seiten und den anderen Gruppen von Seiten besteht.

11. Das Computersystem (100) nach einem der Ansprüche 7 bis 10, wobei
die Vorrichtung (112) mit dem Prozessor (104) über eine kohärente Warteschlangenschnittstelle (114) gekoppelt ist.

12. Ein nicht-transitorisches computerlesbares Medium aufweisend Anweisungen zum Ausführen eines Verfahrens zum Verwalten einer Speicherhierarchie mit einem ersten Speicher und einem zweiten Speicher, der sich an einer niedrigeren Position in der Speicherhierarchie als der erste Speicher befindet, wobei das Verfahren aufweist:
Beobachten, über einen ersten Zeitraum, von Zugriffen auf Seiten des ersten Speichers;
Bestimmen, dass während des ersten Zeitraums auf keine Seite in einer ersten Gruppe von Seiten des ersten Speichers zugegriffen wurde;
als Reaktion auf das Bestimmen, dass während des ersten Zeitraums auf keine Seite in der ersten Gruppe von Seiten zugegriffen wurde, Bewegen jeder Seite in der ersten Gruppe von Seiten von dem ersten Speicher zu dem zweiten Speicher;
Erzeugen einer Zählung von Seiten, auf die während des ersten Zeitraums in anderen Gruppen von Seiten des ersten Speichers zugegriffen wurde;
als Reaktion auf das Bestimmen, dass die Seitenzählung kleiner als eine Schwellenanzahl von Seiten ist, Bewegen jeder Seite in einer zweiten Gruppe von Seiten, auf die während des ersten Zeitraums nicht zugegriffen wurde, von dem ersten Speicher zu dem zweiten Speicher, wobei die zweite Gruppe von Seiten eine der anderen Gruppen von Seiten ist und mindestens eine Seite, auf die während des ersten Zeitraums nicht zugegriffen wurde, und mindestens eine Seite, auf die während des ersten Zeitraums zugegriffen wurde, aufweist;
vor dem ersten Zeitraum, Speichern von Seitentabelleneinträgen einer Teilmenge aller Seiten des ersten Speichers in einem Cache, wobei die Teilmenge alle Seiten in der ersten und anderen Gruppen aufweist und die Seitentabelleneinträge jeder Gruppe von Seiten in einer entsprechenden Cache-Zeile des Caches gespeichert sind; und
Entfernen einer Cache-Zeile aus dem Cache, die die Seitentabelleneinträge einer Gruppe von Seiten enthält, wenn während des ersten Zeitraums auf irgendeine der Seiten in der Gruppe zugegriffen wird, wobei
der Schritt des Bestimmens, dass während des ersten Zeitraums auf keine Seite in der ersten Gruppe von Seiten zugegriffen wurde, das Bestimmen aufweist, dass die Cache-Zeile, die die Seitentabelleneinträge der ersten Gruppe von Seiten enthält, an einem Ende des ersten Zeitraums in dem Cache verbleibt.

13. Das nicht-transitorische computerlesbare Medium gemäß Anspruch 12, wobei
der Schritt des Erzeugens der Zählung von Seiten aufweist:
Untersuchen von Seitentabelleneinträgen, die in Cache-Zeilen des Caches gespeichert wurden, die während des ersten Zeitraums aus dem Cache entfernt wurden; und
Erzeugen einer Zählung der untersuchten Seitentabelleneinträge mit einem Zugriffsbit, das gesetzt ist.

14. Das nicht-transitorische computerlesbare Medium gemäß einem der Ansprüche 12 bis 13, wobei
der Schritt des Bewegens einer Seite von dem ersten Speicher zu dem zweiten Speicher aufweist:
Kopieren von Inhalten der Seite von einem Ort in dem ersten Speicher zu einem Ort in dem zweiten Speicher; und
Aktualisieren eines Seitentabelleneintrags der Seite, um auf den Ort in dem zweiten Speicher zu zeigen.

15. Das nicht-transitorische computerlesbare Medium gemäß Anspruch 14, wobei
das Verfahren ferner aufweist:
Erzeugen einer Zählung von Zugriffen auf eine zweite Seite, die sich in dem zweiten Speicher befindet; und
auf das Bestimmen hin, dass die Zugriffszählung größer als eine Schwellenanzahl von Zugriffen ist, Bewegen der zweiten Seite von dem zweiten Speicher zu dem ersten Speicher.

## Revendications

1. Procédé de gestion d'une hiérarchie de mémoires incluant une première mémoire et une seconde mémoire qui est à une position plus basse dans la hiérarchie de mémoires que la première mémoire, le procédé comprenant les étapes consistant à :
observer, sur une première période de temps, des consultations de pages de la première mémoire ;
déterminer qu'aucune page d'un premier groupe de pages de la première mémoire n'a été consultée pendant la première période de temps ;
en réponse à la détermination qu'aucune page du premier groupe de pages n'a été consultée pendant la première période de temps, déplacer (616) chaque page du premier groupe de pages de la première mémoire à la seconde mémoire ;
générer (704) un décompte de pages consultées pendant la première période de temps dans d'autres groupes de pages de la première mémoire ;
en réponse à la détermination que le décompte de pages est inférieur (706 :NO) à un nombre de pages de seuil, déplacer (712) chaque page du deuxième groupe de pages qui n'a pas été consultée pendant la première période de temps de la première mémoire à la seconde mémoire, dans lequel le deuxième groupe de pages est l'un des autres groupes de pages et inclut au moins une page qui n'a pas été consultée pendant la première période de temps et au moins une page qui a été consultée pendant la première période de temps ;
avant la première période de temps, stocker des entrées de table de pages d'un sous-ensemble de toutes les pages de la première mémoire dans un cache, dans lequel le sous-ensemble inclut toutes les pages du premier et des autres groupes et les entrées de table de pages de chaque groupe de pages sont stockées dans une ligne de cache correspondante du cache ; et
expulser à partir du cache une ligne de cache qui contient les entrées de table de pages d'un groupe de pages si l'une quelconque des pages du groupe est consultée pendant la première période de temps, dans lequel l'étape de détermination qu'aucune page du premier groupe de pages n'a été consultée pendant la première période de temps inclut une détermination que la ligne de cache contenant les entrées de table de pages du premier groupe de pages reste dans le cache à la fin de la première période de temps.

2. Procédé selon la revendication 1, dans lequel
l'étape de génération du décompte de pages inclut les étapes consistant à :
examiner des entrées de table de pages qui ont été stockées dans les lignes de cache du cache qui ont été expulsées du cache au cours de la première période de temps ; et
générer un décompte d'entrées de tables de pages examinées présentant un bit de consultation qui est défini.

3. Procédé selon l'une quelconque des revendications 1 à 2, dans lequel l'étape consistant à déplacer (616, 712) une page de la première mémoire vers la seconde mémoire inclut les étapes consistant à :
copier le contenu de la page à partir d'un emplacement dans la première mémoire vers un emplacement dans la seconde mémoire ; et
mettre à jour une entrée de table de pages de la page pour pointer vers l'emplacement dans la seconde mémoire.

4. Procédé selon la revendication 3, comprenant en outre les étapes consistant à :
générer un décompte de consultations d'une seconde page résidant dans la seconde mémoire ; et
après avoir déterminé que le décompte d'accès est supérieur à un nombre de consultations de seuil, déplacer la seconde page de la seconde mémoire à la première mémoire.

5. Procédé selon la revendication 4, comprenant en outre les étapes consistant à :
localiser une entrée de table de pages correspondant à la seconde page ; et
mettre à jour l'entrée de table de pages pour pointer vers un emplacement dans la première mémoire vers lequel la seconde page a été déplacée.

6. Procédé selon l'une quelconque des revendications 1 à 5, comprenant en outre les étapes consistant à :
en réponse à la détermination que le décompte de pages est supérieur au nombre de pages de seuil,
déplacer chaque page du premier groupe de pages de la seconde mémoire à la première mémoire, et
mettre à jour une entrée de table de pages qui pointe vers une table de pages contenant des entrées de table de pages du premier groupe de pages et des autres groupes de pages pour pointer vers un emplacement dans la première mémoire qui stocke une grande page qui est composée du premier groupe de pages et des autres groupes de pages.

7. Système informatique (100), comprenant :
un processeur (104) et une première mémoire (106) pour le processeur (104) ; et
un dispositif (112) couplé au processeur (104) et incluant un cache (164) et une seconde mémoire (116),
dans lequel le dispositif (112) est configurée pour :
observer, sur une première période de temps, des consultations de pages de la première mémoire (106) ;
déterminer qu'aucune page d'un premier groupe de pages de la première mémoire (106) n'a été consultée pendant la première période de temps ; et
en réponse à la détermination qu'aucune page du premier groupe de pages n'a été consultée pendant la première période de temps, déplacer chaque page du premier groupe de pages de la première mémoire (106) à la seconde mémoire (116), et
dans lequel le processeur (104) est configuré pour :
générer un décompte de pages consultées pendant la première période de temps dans d'autres groupes de pages de la première mémoire ;
en réponse à la détermination que le décompte de pages est inférieur à un nombre de pages de seuil, déplacer chaque page du deuxième groupe de pages qui n'a pas été consultée pendant la première période de temps de la première mémoire (106) à la seconde mémoire (116), dans lequel le deuxième groupe de pages est l'un des autres groupes de pages et inclut au moins une page qui n'a pas été consultée pendant la première période de temps et au moins une page qui a été consultée pendant la première période de temps ;
avant la première période de temps, stocker des entrées de table de pages d'un sous-ensemble de toutes les pages de la première mémoire dans le cache, dans lequel le sous-ensemble inclut toutes les pages du premier et des autres groupes et les entrées de table de pages de chaque groupe de pages sont stockées dans une ligne de cache correspondante du cache ;
expulser du cache une ligne de cache qui contient les entrées de table de pages d'un groupe de pages si l'une des pages du groupe est consultée au cours de la première période de temps, et
le dispositif (112) détermine qu'aucune page du premier groupe de pages n'a été consultée pendant la première période de temps en déterminant que la ligne de cache contenant les entrées de table de pages du premier groupe de pages reste dans le cache à la fin de la première période de temps.

8. Système informatique (100) selon la revendication 7, dans lequel :
le processeur (104) génère un décompte de pages consultées par l'intermédiaire des étapes consistant à :
examiner des entrées de table de pages qui ont été stockées dans les lignes de cache du cache qui ont été expulsées du cache au cours de la première période de temps ; et
générer un décompte d'entrées de tables de pages examinées présentant un bit de consultation qui est défini.

9. Système informatique (100) selon l'une quelconque des revendications 7 à 8, dans lequel le dispositif (112) déplace une page de la première mémoire (106) à la seconde mémoire (116) par l'intermédiaire des étapes consistant à :
copier le contenu de la page à partir d'un emplacement dans la première mémoire (106) vers un emplacement dans la seconde mémoire (116) ; et
mettre à jour une entrée de table de pages de la page pour pointer vers l'emplacement dans la seconde mémoire (116) ;
dans lequel en particulier
le dispositif (112) est en outre configuré pour générer un décompte de consultations d'une seconde page résidant dans la seconde mémoire, et
le processeur (104) est en outre configuré pour déplacer la seconde page de la seconde mémoire (116) à la première mémoire (116) après avoir déterminé que le décompte de consultations est supérieur à un nombre de consultations de seuil ;
dans lequel en outre en particulier
le processeur (104) est en outre configuré pour :
localiser une entrée de table de pages correspondant à la seconde page ; et
mettre à jour l'entrée de table de pages pour pointer vers un emplacement dans la première mémoire (106) vers lequel la seconde page a été déplacée.

10. Système informatique (100) selon l'une quelconque des revendications 7 à 9, dans lequel le processeur (104) est configuré pour :
en réponse à la détermination que le décompte de pages est supérieur au nombre de pages de seuil,
déplacer chaque page du premier groupe de pages de la seconde mémoire à la première mémoire, et
mettre à jour une entrée de table de pages qui pointe vers une table de pages contenant des entrées de table de pages du premier groupe de pages et des autres groupes de pages pour pointer vers un emplacement dans la première mémoire qui stocke une grande page qui est composée du premier groupe de pages et des autres groupes de pages.

11. Système informatique (100) selon l'une quelconque des revendications 7 à 10, dans lequel le dispositif (112) est couplé au processeur (104) via une interface de file d'attente cohérente (114).

12. Support lisible par ordinateur non transitoire comprenant des instructions pour mettre en œuvre un procédé de gestion d'une hiérarchie de mémoires incluant une première mémoire et une seconde mémoire qui est à une position plus basse dans la hiérarchie de mémoires que la première mémoire, le procédé comprenant les étapes consistant à :
observer, sur une première période de temps, des consultations de pages de la première mémoire ;
déterminer qu'aucune page d'un premier groupe de pages de la première mémoire n'a été consultée pendant la première période de temps ;
en réponse à la détermination qu'aucune page du premier groupe de pages n'a été consultée pendant la première période de temps, déplacer chaque page du premier groupe de pages de la première mémoire à la seconde mémoire ;
générer un décompte de pages consultées pendant la première période de temps dans d'autres groupes de pages de la première mémoire ;
en réponse à la détermination que le décompte de pages est inférieur à un nombre de pages de seuil, déplacer chaque page du deuxième groupe de pages qui n'a pas été consultée pendant la première période de temps de la première mémoire à la seconde mémoire, dans lequel le deuxième groupe de pages est l'un des autres groupes de pages et inclut au moins une page qui n'a pas été consultée pendant la première période de temps et au moins une page qui a été consultée pendant la première période de temps ;
avant la première période de temps, stocker des entrées de table de pages d'un sous-ensemble de toutes les pages de la première mémoire dans un cache, dans lequel le sous-ensemble inclut toutes les pages du premier et des autres groupes et les entrées de table de pages de chaque groupe de pages sont stockées dans une ligne de cache correspondante du cache ; et
expulser à partir du cache une ligne de cache qui contient les entrées de table de pages d'un groupe de pages si l'une quelconque des pages du groupe est consultée pendant la première période de temps, dans lequel l'étape de détermination qu'aucune page du premier groupe de pages n'a été consultée pendant la première période de temps inclut une détermination que la ligne de cache contenant les entrées de table de pages du premier groupe de pages reste dans le cache à la fin de la première période de temps.

13. Support lisible par ordinateur non transitoire selon la revendication 12, dans lequel l'étape consistant à générer le décompte de pages inclut les étapes consistant à :
examiner des entrées de table de pages qui ont été stockées dans les lignes de cache du cache qui ont été expulsées du cache au cours de la première période de temps ; et
générer un décompte d'entrées de tables de pages examinées présentant un bit de consultation qui est défini.

14. Support lisible par ordinateur non transitoire selon l'une quelconque des revendications 12 à 13, dans lequel l'étape consistant à déplacer une page de la première mémoire à la seconde mémoire inclut les étapes consistant à :
copier le contenu de la page à partir d'un emplacement dans la première mémoire vers un emplacement dans la seconde mémoire ; et
mettre à jour une entrée de table de pages de la page pour pointer vers l'emplacement dans la seconde mémoire.

15. Support lisible par ordinateur non transitoire selon la revendication 14, dans lequel
le procédé comprenant en outre les étapes consistant à :
générer un décompte de consultations d'une seconde page résidant dans la seconde mémoire ; et
après avoir déterminé que le décompte d'accès est supérieur à un nombre de consultations de seuil, déplacer la seconde page de la seconde mémoire à la première mémoire.
